# EUROPÄISCHE PATENTSCHRIFT

(11) **EP 3 878 265 B1**
(45) Veröffentlichungstag und Bekanntmachung des Hinweises auf die Patenterteilung: **01.11.2023**
(21) Anmeldenummer: 21152884.9
(22) Anmeldetag: 22.01.2021
(51) Int. Cl.: A01D 34/83, A01D 45/02, A01D 61/02, F16G 5/04, F16G 5/20, B65G 15/42

(54) **WERKZEUGTRAGENDER RIEMEN**
TOOL-CARRYING BELT
SANGLE PORTE-OUTILS

(30) Priorität: 10.03.2020 DE 102020203002
(43) Veröffentlichungstag der Anmeldung: 15.09.2021
(73) Patentinhaber: ContiTech Antriebssysteme GmbH, 30165 Hannover (DE)
(72) Erfinder: Freiheit, Philipp, 30419 Hannover (DE); Schwefe, Thorsten, 30419 Hannover (DE)
(74) Vertreter: Continental Corporation

(56) Entgegenhaltungen:
- EP-A2- 2 345 321
- WO-A1-93/20681
- DE-A1-102016 217 725
- US-A- 2 869 711
- US-A- 4 495 755
- US-A1- 2019 141 894

## Beschreibung

Die Erfindung betrifft einen bandförmigen, antreibbaren Werkzeugträger, der ein längs seiner Antriebsrichtung sich erstreckendes, gurtförmiges oder riemenartiges Trägerelement aus elastomerem Material aufweist, welches mit eingebetteten und sich in seiner Längsrichtung ersteckenden Verstärkungselementen oder Zugträgern versehen ist, wobei das Trägerelement eine vorzugsweise profilierte und mit mindestens einer Antriebsrolle zusammenwirkende Antriebsseite sowie eine Arbeits- oder Rückenseite aufweist.

Die Erfindung betrifft ebenfalls die Verwendung eines solchen Werkzeugträgers innerhalb einer Schnitt- oder Erntemaschine sowie ein Verfahren zur Herstellung eines solchen Werkzeugträgers.

Der Einsatz von antreibbaren Werkzeugträgern, die ein längs seiner Umlauf- und Antriebsrichtung sich erstreckendes, Antriebs- und Umlenkrollen umlaufend umschlingendes gurt- oder riemenartiges Trägerelement aus elastomerem Material aufweisen, welche mittels Halterungen mit Schneidwerkzeugen, insbesondere mit Messern verbunden sind, ist beispielsweise durch die DE 10 2018 219 554 A1 bekannt. Offenbart wird hier eine Schneidvorrichtung zum Abschneiden von Pflanzenmaterial, die zumindest zwei Riemenscheiben umfasst sowie einem umlaufenden Keilriemen. Der Keilriemen ist dabei über eine Halterung kraftschlüssig mit einer Anzahl von auf seiner Rückenseite angeordneten Messern verbunden und läuft auf den zwei Riemenscheiben/Rollen innerhalb einer Schneidvorrichtung eines Mähdreschers. Die hier vorgeschlagene kraftschlüssige Kopplung der Messer an die Keilriemen mithilfe einer den Keilriemen umfassenden Halterung stellt eine etwas aufwändige Konstruktion dar und muss durch Klemmung oder durch Nieten am Keilriemen befestigt werden. Zudem vergrößert die dort vorgeschlagene Halterung die Riemensteifigkeit, was den Umlauf ungünstig beeinflusst und die Antriebsleistungen erhöht.

Die DE 27 07 030 A1 offenbart einen aus schuppenartig angeordneten Einzelteilen aufgebauten Keilriemen, der ebenfalls auf seiner Rückseite mit Schneidmessern versehen ist und in innerhalb eines Schneidwerks für Mähvorrichtungen umläuft. Nachteilig ist hier der hohe Herstellungsaufwand für einen solchen aus Einzelteilen aufgebauten Keilriemen sowie die ebenfalls sehr aufwändige Befestigung der Messer mittels Nietverbindungen.

Die US 9,248,970 B2 offenbart ein System zur Verbindung von Anschlusselementen an die Rückenfläche eines Zahnriemens, bei dem zwei auf der Rückenfläche gegenüberliegend angeordnete Lagerkörper mit durch den Riemen geschraubten Bolzen mit dem Riemen verbunden werden und bei dem eine durch eine Ausnehmung im Riemen greifende Lagerplatte für die Werkzeugaufnahme vorgesehen ist. Der Zahnriemen ist mit in Längsrichtung eingebetteten Verstärkungselementen bzw. Zugelementen versehen. Zur Befestigung der Lagerkörper und der Lagerplatte müssen Öffnungen und Bohrungen im Zahnriemen angeordnet werden, die nachteiligerweise dessen Festigkeit beeinflussen. Ein Werkzeugträger gemäß Oberbegriff des Anspruchs 1 ist offenbart in der US 4 495 755 A.

Die Aufgabe der vorliegenden Erfindung bestand demnach in der Bereitstellung eines antreibbaren Werkzeugträgers in Form eines Elastomerriemens, der hohe Werkzeugkräfte übertragen kann, der mit unterschiedlichen Werkzeugen und anderem Vorrichtungen verbunden werden kann, der einfach herzustellen ist, einen einfachen Werkzeugwechsel ermöglicht und der so aufgebaut ist, dass die Festigkeitsträger durch das Anbringen von Werkzeugen oder deren Halterungen nicht geschädigt werden und der Werkzeugträger damit ohne Festigkeitsverlust einsetzbar ist.

Gelöst wird diese Aufgabe durch die Merkmale des Hauptanspruchs. Weitere vorteilhafte Ausbildungen sind in den Unteransprüchen offenbart. Ebenfalls offenbart ist die Verwendung des erfindungsgemäßen Werkzeugträgers innerhalb einer Schnitt- und Erntemaschine sowie ein besonders geeignetes Verfahren zur Herstellung des erfindungsgemäßen Werkzeugträgers.

Dabei sind auf der Arbeits- oder Rückenseite des Trägerelements erhaben ausgebildete und stoffschlüssig mit dem Trägerelement verbundene Anschlusselemente oder Nocken vorgesehen, vorzugsweise aus gleichem Material, die zur Verbindung des Trägerelements mit den jeweiligen Werkzeugen oder mit mehrteiligen Einrichtungen zur Aufnahme von Werkzeugen ausgebildet und verbunden sind. Solche als Schnittstellen zu den Werkzeugen ausgebildeten Nocken oder Anschlusselemente bewirken keinerlei Beeinflussung im Sinne einer Reduzierung der Festigkeit des Riemens bzw. seiner Verstärkungselementen, ermöglichen die Anbindung verschiedener Werkzeuge, erlauben ein einfachen Austausch derselben und erleichtern so die Wartung und Instandhaltung.

Grundsätzlich können natürlich beliebige Werkzeuge angeschlossen werden, beispielsweise Werkzeuge, die eine mechanische Bearbeitung von Gegenständen erlauben, wie dies etwa bei Schleif- oder Reinigungsprozessen genutzt werden kann. Ebenfalls ist es möglich, Schneid- oder Sägewerkzeuge einzusetzen oder Werkzeuge vorzusehen, die dem Transport von Schüttgütern dienen, etwa in Form von Harken oder Rechen.

Eine vorteilhafte Weiterbildung besteht darin, dass das Trägerelement als endlos umlaufender Zugriemen ausgebildet ist, welcher längs seiner Umlauf- und/oder Antriebsrichtung mehrere Rollen umlaufend umschlingt, nämlich Antriebs- und Umlenkrollen. Mit einer solchen Ausbildung ist nicht nur ein Linearantrieb des Werkzeugträgers möglich, etwa ein oszillierender Schnitt- oder Transportbetrieb, sondern auch ein kontinuierlicher Antrieb, beispielsweise in Form eines umlaufenden Messers. Die Anwendung eines erfindungsgemäßen Werkzeugträgers in einer Schneideinrichtung mit einem kontinuierlich rotierenden Riemen ermöglicht beispielsweise eine höhere Schnittgeschwindigkeit, da im Vergleich zu oszillierenden Messern Beschleunigungs- und Bremsvorgänge und vermieden werden

Eine vorteilhafte Weiterbildung besteht darin, dass das Trägerelement als Zahnriemen, Keilriemen oder Keilrippenriemen mit rückenseitig vorgesehenen Anschlusselementen oder Nocken ausgebildet ist. Bei solchen Ausbildungen des Trägerelement lassen sich sehr hohe Arbeitskräfte bzw. Zugkräfte und somit erhebliche Werkzeugkräfte übertragen.

Erfindungsgemäß sind die Anschlusselemente oder Nocken mit mehrteiligen Einrichtungen zur Aufnahme von Werkzeugen verbunden. Das erhöht die Variabilität im Hinblick auf die Aufnahme von verschiedenen Werkzeugen, etwa in der Form, dass bestimmte Gleichteile in der Werkzeughalterung mit komplementären Teilen an den Anschlusselementen verbunden werden können.

Erfindungsgemäß weisen die mehrteiligen Einrichtungen eine einerseits mit den Anschlusselementen oder Nocken verbindbare Grundplatte auf, welche andererseits zur Verbindung mit komplementär zur Grundplatte ausgebildeten Adaptern zur Werkzeugaufnahme vorgesehen ist, wobei Grundplatte und Adapter vorzugsweise über komplementäre Keil- oder Schwalbenschwanzprofile verbunden sind. Solche Profile sind im Stand der Technik bekannt und in vielerlei Verbindungen üblich, bei denen es auf eine feste und sichere Halterung ankommt.

Eine weitere vorteilhafte und einfach zu realisierende Ausbildung besteht darin, dass die Verbindungen der Anschlusselemente oder Nocken mit den jeweiligen Werkzeugen oder Einrichtungen zur Aufnahme von Werkzeugen als Schraubverbindungen ausgebildet sind. Die Schraubverbindungen können dabei so ausgebildet sein, dass die Anschlusselemente entweder mit einem Innengewinde zur Verbindung mit einem Gewindebolzen ausgebildet sind, oder mit einem Außengewinde, mit dem eine Gewindehülse verschraubt werden kann.

Eine weitere vorteilhafte Ausbildung besteht darin, dass die Anschlusselemente oder Nocken oder die Einrichtungen zur Aufnahme von Werkzeugen sich quer zur Längsrichtung des gurt- oder riemenartiges Trägerelements erstrecken. Insbesondere im Zusammenwirken mit einer weiteren vorteilhaften Ausbildung, die darin besteht, dass der Werkzeugträger als Zahnriemen ausgebildet ist und die Anschlusselemente oder Nocken oder die Einrichtungen zur Aufnahme von Werkzeugen sich symmetrisch längs der Zahnmittenebene erstrecken, erreicht man, dass die Biegeflexibilität des Werkzeugträgers erhalten bleibt, auch beim Umlauf um Antriebs- oder Umlenkrollen kleineren Durchmessers. Man vermeidet also eine Erhöhung der Riemensteifigkeit, was auch dazu führt, dass eine unzulässige Erwärmung des Riemens bzw. Werkzeugträgers vermieden wird und der Wirkungsgrad hoch bleibt.

Eine weitere vorteilhafte Ausbildung besteht darin, dass das das jeweilige Werkzeuge sich über mehr als eine Zahnbreite oder Zahnteilung erstreckt, wobei das Werkzeug vorzugsweise in mehreren stoffschlüssig mit dem Trägerelement verbundenen Anschlusselementen, Nocken oder Einrichtungen zur Aufnahme von Werkzeugen aufgenommen ist. Damit vermeidet man eine Erhöhung der Riemensteifigkeit, während man trotzdem die die Werkzeuge in notwendiger Form vergrößern kann. So können zum Beispiel die die Anschlusselemente oder Nocken oder die Einrichtungen zur Aufnahme von Werkzeugen in der Breite eines Zahnes ausgeführt werden, um den Riemen nicht zusätzlich zu versteifen. In Längsrichtung des Trägerelements oder des Zahnriemens, also in Arbeitsrichtung, weisen die Anschlusselemente, Nocken oder Einrichtungen eine Führungsnut auf, in der das Werkzeug, etwa ein Messer, das sich über mehrere Riemenzähne bzw. Zahnteilungen erstreckt, seitlich und auf seine Unterseite geführt wird. Das Werkzeug muss dann nur in einer der Führungsnuten, in der Regel in der mittleren, in Längsrichtung des Werkzeugträgers fixiert sein.

Eine weitere vorteilhafte Ausbildung besteht darin, dass das elastomere Material des Werkzeugträgers im Wesentlichen thermoplastisches Polyurethan ist. Riemen aus Polyurethan bieten u.a. den Vorteil, dass eine nachträgliche Veredelung bzw. Weiterbearbeitung leicht möglich ist. Innerhalb einer solchen Weiterbearbeitung können z.B. mit einem Innengewinde versehene hülsenartige Nocken aus gleichem Material auf dem Riemenrücken verschweißt werden. Diese Nocken bilden dann erfindungsgemäß die oder einen Teil der Schnittstelle zu einem Werkzeug.

Eine weitere vorteilhafte Ausbildung besteht darin, dass die Anschlusselemente oder Nocken oder die Einrichtungen zur Aufnahme von Werkzeugen mit als Messer oder Schneidelemente ausgebildeten Werkzeugen so verbindbar sind, dass das gurt- oder riemenartige Trägerelement ein umlaufendes Bandmesser oder eine umlaufende Bandsäge bildet. Wie bereits oben dargestellt, weist ein solches als umlaufendes Bandmesser ausgebildetes Trägerelement den Vorteil auf, dass im Vergleich zu oszillierenden Messern eine höhere Schnittgeschwindigkeit erreichbar ist.

Trotzdem haben oszillierende Werkzeuge natürlich in einer Reihe von Anwendungsfällen Vorteile, beispielsweise dort, wo nur ein relativ kurzer linearer Arbeitsweg zur Verfügung steht. Eine weitere vorteilhafte Ausbildung besteht deswegen darin, dass die Messer oder Schneidelemente beidseitig schneidend ausgebildet sind und das gurt- oder riemenartige Trägerelement als vorzugsweise oszillierend angetriebenes und über einer Teillänge des Trägerelements linear arbeitendes Bandmesser oder linear arbeitende Bandsäge ausgebildet ist.

Zur Anwendung in Fördersystemen oder als Förderbänder besteht eine weitere vorteilhafte Ausbildung darin, dass die Anschlusselemente oder Nocken oder die Einrichtungen zur Aufnahme von Werkzeugen mit als Mitnehmer oder Rechen ausgebildeten Werkzeugen verbindbar sind, wobei das gurt- oder riemenartige Trägerelement ein umlaufendes und/oder linear arbeitendes Förderelement bildet.

Bei allen diesen Anwendungen in Form von oszillierenden oder umlaufenden Bearbeitungs- oder Schneidwerkzeugen oder auch bei Förderbändern ergibt sich der Vorteil, dass durch die Verwendung eines Trägerelements aus elastomerem Material ein Werkzeugträgers mit einer sehr geringen Masse vorhanden ist, der trotzdem hohe Werkzeugkräfte übertragen kann.

Besonders vorteilhaft kann ein solcher Werkzeugträger deshalb innerhalb einer Schneid- oder Förderanlage einer Schnitt- und Erntemaschine eingesetzt werden, vorzugsweise in einem Schneidwerk eines Mähdreschers.

Ein besonders vorteilhaftes Verfahren zu Herstellung eines erfindungsgemäßen Werkzeugträgers besteht darin, dass das gurt- oder riemenartiges Trägerelement aus elastomerem Material, respektive Polyurethan, zusammen mit den eingebetteten und sich in seiner Längsrichtung ersteckenden Verstärkungselementen extrudiert wird und danach die stoffschlüssig mit dem Trägerelement verbundenen Anschlusselemente oder Nocken auf der Arbeits- oder Rückenseite des Trägerelements angeschweißt werden. In einem solchen Verfahren zur Herstellung lassen sich jede Art und Form von Anschlusselementen oder Nocken mit dem Trägerelement aus elastomerem Material verbinden, ohne dass die eigentliche Formgebung des Riemens oder Trägerelements beeinflusst wird. Das extrudierte Trägerelement kann mittels einer formschlüssigen, kraftschlüssigen oder stoffschlüssigen Verbindung durch z.B. Verschweißen der Enden zu einem endlosen Element verbunden werden.

Gegenüber den bekannten Ausführungen im Stand der Technik bestehen die Vorteile eines erfindungsgemäß ausgebildeten Werkzeugträgers darin, dass keine mechanische Schädigung des Riemens bzw. seines Zugstrangs erfolgt, dass eine flexible Anbindung verschiedener Werkzeuge und ein einfacher Austausch verschlissener Werkzeuge möglich ist und dass aufgrund der leichten und anpassbar ausgebildeten Werkzeugträgers Antriebe mit vergleichsweise geringerem Energieverbrauch eingesetzt werden können..

Anhand eines Ausführungsbeispiels soll die Erfindung näher erläutert werden. Es zeigen
- Fig. 1: Eine Prinzipskizze eines Schneidwerks mit einem erfindungsgemäßen Werkzeugträger,
- Fig. 2: eine vergrößerte Darstellung einer Ausführung der erfindungsgemäßen Verbindung zwischen Trägerelement und einer Einrichtung zur Aufnahme von Werkzeugen
- Fig. 3: eine vergrößerte Darstellung einer weiteren Ausführung der erfindungsgemäßen Verbindung zwischen Trägerelement und einer Einrichtung zur Aufnahme von Werkzeugen

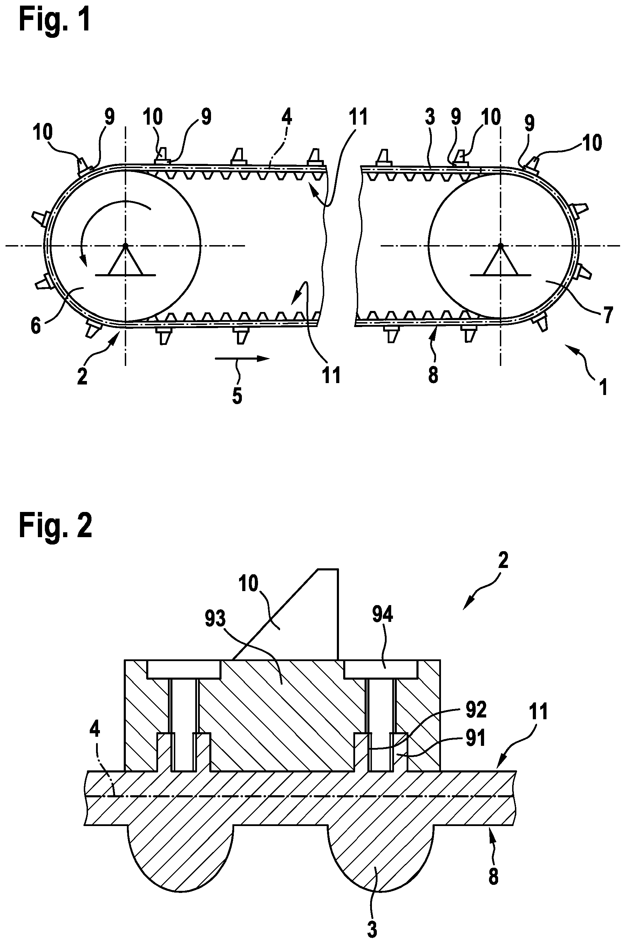

Fig. 1 zeigt in Form einer Prinzipskizze das Schneidwerk 1 einer hier nicht näher dargestellten Schnitt- und Erntemaschine für stängeliges oder langhalmiges Erntegut, welches mit einem erfindungsgemäßen Werkzeugträger versehen ist. Der Werkzeugträger 2 weist ein längs seiner Antriebsrichtung sich erstreckendes gurtförmiges oder riemenartiges Trägerelement aus elastomerem Material auf, hier ausgebildet als Zahnriemen 3 mit eingebetteten und sich in seiner Längsrichtung ersteckenden Zugträgern in Form von Stahlcorden, deren Lage hier in den Fig. 1, 2 und 3 lediglich durch eine strichpunktierte Linie 4 angedeutet sind.

Das als Zahnriemen 3 ausgebildete Trägerelement ist hier ein endlos umlaufender Riemen, welcher längs seiner Umlauf- und Antriebsrichtung 5 eine Antriebsrolle 6 und eine Umlenkrolle 7 umlaufend umschlingt. Weitere erforderliche, aber nicht erfindungswesentliche Stütz-, Umlenk- oder Spannrollen sind hier nicht näher dargestellt. Das Trägerelement 3 weist eine vorzugsweise profilierte und mit mindestens einer Antriebsrolle 6 zusammenwirkende Antriebsseite 11 sowie eine Arbeits- oder Rückenseite 8 auf.

Auf der Rückenseite 8 des Zahnriemens sind erhaben ausgebildete und stoffschlüssig mit dem Trägerelement verbundene Anschlusselemente 9 vorgesehen, die zur Verbindung der Zahnriemenrückseite mit den als Messer 10 ausgebildeten Werkzeugen bzw. zur Verbindung mit Einrichtungen 93, 103 zur Aufnahme von solchen Messern ausgebildet sind. Es entsteht so ein umlaufendes Bandmesser.

Die Ausbildung der unterschiedlichen Anschlusselemente 9 oder Nocken zur Verbindung des Trägerelements 3 mit den jeweiligen Werkzeugen 10 oder mit Einrichtungen 93, 103 zur Aufnahme von Werkzeugen 10 erschließt sich in der Zusammenschau der Figur 1 mit den übrigen detaillierten Darstellungen.

Fig. 2 zeigt prinzipiell eine vergrößerte Darstellung eines Ausschnitts des Werkzeugträgers 2, hier insbesondere eine Darstellung der Verbindung zwischen Trägerelements 3 und den jeweiligen Werkzeugen 10 oder Einrichtungen zur Aufnahme von Werkzeugen 10, wie hier z.B. in Form einer Grundplatte ausgebildete Einrichtungen 93 zur Aufnahme eines als Messer ausgebildeten Werkzeugs 10.

Das als Zahnriemen ausgebildeten Trägerelement 3 ist rückenseitig mit Nocken 91 versehen, die jeweils in Form eine Hülse ausgebildet sind, welche ein Innengewinde 92 aufweist. Die Nocken bestehen aus dem gleichen Material wie der Zahnriemen, hier aus thermoplastischem Polyurethan, und sind mit der Rückenseite des Zahnriemens mit diesem verschweißt. Die hülsenförmigen Nocken 91 sind mit Hilfe einer Schraube 94 mit der Grundplatte 93 verbunden. Die Grundplatte 93 ist wiederum fest verbunden mit dem als Messer ausgebildeten Werkzeug 10. Durch eine solche Konstruktion können die als Messer 10 ausgebildeten Werkzeuge einfach durch Lösen der die Grundplatte mit den Nocken 91 verbindenden Schrauben 94 gewechselt werden.

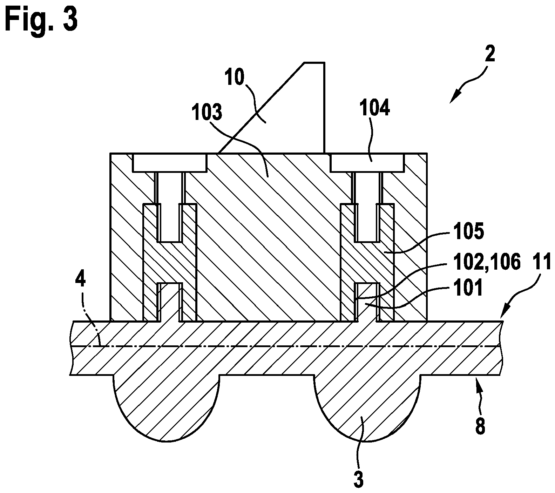

Fig. 3 zeigt - ebenfalls nur prinzipiell - eine vergrößerte Darstellung einer anderen Ausführung mit mehrteiligen Einrichtungen zur Aufnahme von Werkzeugen am Beispiel einer Verbindung mit einer als Grundplatte 103 zur Aufnahme eines als Messer ausgebildeten Werkzeugs 10.

Das als Zahnriemen ausgebildeten Trägerelement 3 ist in dieser Ausführung rückenseitig mit bolzenförmigen Nocken 101 versehen, die jeweils in Form eines Gewindebolzens ausgebildet sind, also ein Außengewinde 102 aufweisen. Die Nocken bestehen auch hier aus dem gleichen Material wie der Zahnriemen (thermoplastisches Polyurethan) und sind an der Rückenseite des Zahnriemens mit diesem verschweißt.

Mit dem Nocken 101 ist ein Zwischenstück 105 verschraubt, das an seinen beiden Enden als Gewindehülse ausgebildet ist. Das Zwischenstück besteht aus einem zylindrischen Körper, in welchen auf beiden Seiten eine konzentrische Bohrung und ein der Bohrung entsprechendes Innengewinde eingebracht sind. Das Zwischenstück, respektive sein unteres Innengewinde, ist auf der einen Seite mit dem bolzenförmigen Nocken 101 verschraubt. Auf seiner anderen Seite ist er über das obere Innengewinde mit Schrauben 104 verbunden, mit deren Hilfe die Grundplatte 103 fixiert wird, die das Werkzeug 10 trägt. Im mittleren Bereich ist der das Zwischenstück bildende zylindrische Körper massiv ausgeführt.

### Bezugszeichenliste

### (Teil der Beschreibung)

- 1: Schneidwerk, prinzipielle Darstellung
- 2: Werkzeugträger
- 3: Zahnriemen (Trägerelement)
- 4: Lage der Zugträger in Form von Stahlcorden
- 5: Umlauf- und Antriebsrichtung
- 6: Antriebsrolle
- 7: Umlenkrolle
- 8: Rückenseite des Zahnriemens
- 9: Anschlusselement
- 10: Messer (Werkzeug)
- 11: Antriebsseite des Zahnriemens

- 91: Nocken
- 92: Innengewinde des Nockens Grundplatte, Einrichtung zur Aufnahme von
- 93: Werkzeugen
- 94: Schraube

- 101: Nocken
- 102: Außengewinde des Nockens Grundplatte, Einrichtung zur Aufnahme von
- 103: Werkzeugen
- 104: Schraube
- 105: Zwischenstück
- 106: Innengewinde des Adapters

## Patentansprüche

1. Bandförmiger, antreibbarer Werkzeugträger (2), der ein längs seiner Antriebsrichtung sich erstreckendes gurtförmiges oder riemenartiges Trägerelement (3) aus elastomerem Material aufweist, welches mit eingebetteten und sich in seiner Längsrichtung erstreckenden Verstärkungselementen oder Zugträgern (4) versehen ist, wobei das Trägerelement (3) eine vorzugsweise profilierte und mit mindestens einer Antriebsrolle (6) zusammenwirkende Antriebsseite (11) sowie eine Arbeits- oder Rückenseite (8) aufweist, wobei auf der Arbeits- oder Rückenseite (8) des Trägerelements (3) erhaben ausgebildete und stoffschlüssig mit dem Trägerelement verbundene Anschlusselemente oder Nocken (91, 101) vorgesehen sind, vorzugsweise aus gleichem Material, die zur Verbindung des Trägerelements (3) mit mehrteiligen Einrichtungen (9, 93, 103) zur Aufnahme von Werkzeugen ausgebildet und mit diesen verbunden sind,
**dadurch gekennzeichnet, dass**,
die mehrteiligen Einrichtungen (9, 93, 103) eine einerseits mit den Anschlusselemente oder Nocken (91, 101) verbindbare Grundplatte (93, 103) aufweisen, welche andererseits zur Verbindung mit komplementär zur Grundplatte (93, 103) ausgebildeten Adaptern zur Werkzeugaufnahme vorgesehen ist, wobei Grundplatte (93, 103) und Adapter über komplementäre Keil- oder Schwalbenschwanzprofile verbunden sind.

2. Werkzeugträger nach Anspruch 1, wobei das Trägerelement (3) als endlos umlaufender Zugriemen ausgebildet ist, welcher längs seiner Umlauf- und/oder Antriebsrichtung Antriebs- und Umlenkrollen (6, 7) umlaufend umschlingt.

3. Werkzeugträger nach Anspruch 1 oder 2, wobei das Trägerelement (3) als Zahnriemen, Keilriemen oder Keilrippenriemen mit den rückenseitig vorgesehenen Anschlusselementen oder Nocken (91, 101) ausgebildet ist.

4. Werkzeugträger nach einem der Ansprüche 1 bis 3, bei dem die Verbindungen der Anschlusselemente oder Nocken (91, 101) mit den jeweiligen Einrichtungen (93, 103) zur Aufnahme von Werkzeugen als Schraubverbindungen ausgebildet sind.

5. Werkzeugträger nach einem der Ansprüche 1 bis 4, bei dem die Anschlusselemente oder Nocken oder die Einrichtungen zur Aufnahme von Werkzeugen sich quer zur Längsrichtung des gurt- oder riemenartiges Trägerelements (3) erstrecken.

6. Werkzeugträger nach Anspruch 5, wobei der Werkzeugträger als Zahnriemen ausgebildet ist und bei dem die Anschlusselemente oder Nocken oder die Einrichtungen zur Aufnahme von Werkzeugen sich symmetrisch längs der Zahnmittenebene erstrecken.

7. Werkzeugträger nach Anspruch 6, bei dem das jeweilige Werkzeug (10) sich über mehr als eine Zahnbreite oder Zahnteilung erstreckt, wobei das Werkzeug vorzugsweise über mehrere stoffschlüssig mit dem Trägerelement verbundenen Einrichtungen aufgenommen ist

8. Werkzeugträger nach einem der Ansprüche 1 bis 7, bei dem das elastomere Material thermoplastisches Polyurethan ist.

9. Werkzeugträger nach einem der Ansprüche 1 bis 8, bei dem die Einrichtungen zur Aufnahme von Werkzeugen mit als Messer oder Schneidelemente ausgebildeten Werkzeugen so verbunden sind, dass das gurt- oder riemenartige Trägerelement ein umlaufendes Bandmesser oder eine umlaufende Bandsäge bildet.

10. Werkzeugträger nach Anspruch 9, bei dem die Messer oder Schneidelemente beidseitig schneidend ausgebildet sind und das gurt- oder riemenartige Trägerelement als vorzugsweise oszillierend angetriebenes und über einer Teillänge des Trägerelements linear arbeitendes Bandmesser oder linear arbeitende Bandsäge ausgebildet ist.

11. Werkzeugträger nach einem der Ansprüche 1 bis 8, bei dem die die Einrichtungen zur Aufnahme von Werkzeugen mit als Mitnehmer oder Rechen ausgebildeten Werkzeugen verbunden sind, wobei das gurt- oder riemenartige Trägerelement ein umlaufendes und/oder linear arbeitendes Förderelement bildet.

12. Verwendung eines Werkzeugträgers nach einem der Ansprüche 1 bis 11 innerhalb einer Schneid- oder Förderanlage einer Schnitt- und Erntemaschine, vorzugsweise eines Mähdreschers.

13. Verfahren zu Herstellung eines Werkzeugträgers nach einem der Ansprüche 1 bis 11, wobei das gurt- oder riemenartiges Trägerelement (3) aus elastomerem Material zusammen mit den eingebetteten und sich in seiner Längsrichtung ersteckenden Verstärkungselementen extrudiert wird und danach die stoffschlüssig mit dem Trägerelement verbundenen Anschlusselemente oder Nocken auf der Arbeits- oder Rückenseite des Trägerelements angeschweißt werden.

## Claims

1. Driveable tool carrier (2) in band form, which has a strap-like or belt-like carrier element (3) extending along its drive direction and composed of elastomer material, which carrier element is provided with embedded reinforcement elements or tension members (4) extending in its longitudinal direction, wherein the carrier element (3) has a preferably profiled drive side (11), which interacts with at least one drive roller (6), and a working or rear side (8), wherein, on the working or rear side (8) of the carrier element (3), provision is made of connection elements or protuberances (91, 101) of elevated form, preferably composed of the same material, which are connected in a materially bonded manner to the carrier element and are configured for connecting the carrier element (3) to multi-part devices (9, 93, 103) for receiving tools and are connected to them,
**characterized in that**
the multi-part devices (9, 93, 103) have a base plate (93, 103) which, on the one hand, is connectable to the connection elements or protuberances (91, 101) and, on the other hand, is intended for connection to adaptors for receiving tools, which adaptors are formed in a complementary manner with respect to the base plate (93, 103), wherein base plate (93, 103) and adaptors are connected via complementary wedge or dovetail profiles.

2. Tool carrier according to Claim 1, wherein the carrier element (3) is in the form of an endlessly circulating traction belt which wraps and extends around drive and deflecting rollers (6, 7) along its circulation and/or drive direction.

3. Tool carrier according to Claim 1 or 2, wherein the carrier element (3) is in the form of a toothed belt, V-belt or V-ribbed belt with the connection elements or protuberances (91, 101) provided on the rear side.

4. Tool carrier according to one of Claims 1 to 3, in which the connections of the connection elements or protuberances (91, 101) to the respective devices (93, 103) for receiving tools are in the form of screw connections.

5. Tool carrier according to one of Claims 1 to 4, in which the connection elements or protuberances or the devices for receiving tools extend transversely to the longitudinal direction of the strap-like or belt-like carrier element (3).

6. Tool carrier according to Claim 5, wherein the tool carrier is in the form of a toothed belt, and in which the connection elements or protuberances or the devices for receiving tools extend symmetrically along the central tooth plane.

7. Tool carrier according to Claim 6, in which the respective tool (10) extends over more than a tooth width or a tooth pitch, wherein the tool is preferably received via multiple devices which are connected in a materially bonded manner to the carrier element.

8. Tool carrier according to one of Claims 1 to 7, in which the elastomer material is thermoplastic polyurethane.

9. Tool carrier according to one of Claims 1 to 8, in which the devices for receiving tools are connected to tools in the form of cutters or cutting elements in such a way that the strap-like or belt-like carrier element forms a circulating band cutter or a circulating band saw.

10. Tool carrier according to Claim 9, in which the cutters or cutting elements are configured to cut on both sides and the strap-like or belt-like carrier element is in the form of a band saw operating linearly, or a band cutter operating linearly, over a partial length of the carrier element, and preferably driven in an oscillatory manner.

11. Tool carrier according to one of Claims 1 to 8, in which the devices for receiving tools are connected to tools in the form of drivers or rakes, wherein the strap-like or belt-like carrier element forms a circulating and/or linearly operating conveying element.

12. Use of a tool carrier according to one of Claims 1 to 11 within a cutting or conveying unit of a cutting and harvesting machine, preferably a combine harvester.

13. Method for producing a tool carrier according to one of Claims 1 to 11, wherein the strap-like or belt-like carrier element (3) composed of elastomer material is extruded together with the embedded reinforcement elements extending in its longitudinal direction, and then the connection elements or protuberances connected in a materially bonded manner to the carrier element are welded onto the working or rear side of the carrier element.

## Revendications

1. Support d'outil (2) en forme de bande, apte à être entraîné, qui présente un élément de support (3) en forme de ceinture ou de courroie en matériau élastomère s'étendant le long de sa direction d'entraînement, qui est pourvu d'éléments de renforcement ou de supports de traction (4) intégrés et s'étendant dans sa direction longitudinale, l'élément de support (3) présentant un côté d'entraînement (11) de préférence profilé et coopérant avec au moins un rouleau d'entraînement (6) ainsi qu'un côté de travail ou arrière (8), des éléments de liaison ou des cames (91, 101) réalisés en relief et reliés à l'élément de support par une liaison par matière étant prévus sur le côté de travail ou le côté arrière (8) de l'élément de support (3), de préférence dans le même matériau, lesquels sont réalisés pour relier l'élément de support (3) à des dispositifs en plusieurs parties (9, 93, 103) destinés à recevoir des outils et sont reliés à ceux-ci,
**caractérisé en ce que**,
les dispositifs en plusieurs parties (9, 93, 103) présentent une plaque de base (93, 103) apte à être reliée d'une part aux éléments de liaison ou aux cames (91, 101), laquelle est prévue d'autre part pour la liaison avec des adaptateurs conçus de manière complémentaire à la plaque de base (93, 103) pour la réception d'outils, la plaque de base (93, 103) et les adaptateurs étant reliés par des profilés complémentaires à clavette ou à queue d'aronde.

2. Support d'outils selon la revendication 1, dans lequel l'élément de support (3) est réalisé sous forme de courroie de traction sans fin qui, le long de son sens de rotation et/ou d'entraînement, entoure des rouleaux d'entraînement et de renvoi (6, 7).

3. Support d'outils selon la revendication 1 ou la revendication 2, l'élément de support (3) étant conçu comme une courroie dentée, une courroie trapézoïdale ou une courroie à nervures trapézoïdales avec les éléments de liaison ou les cames (91, 101) prévus du côté arrière.

4. Support d'outils selon l'une des revendications 1 à 3, dans lequel les liaisons des éléments de liaison ou des cames (91, 101) avec les dispositifs respectifs (93, 103) destinés à recevoir des outils sont réalisées sous forme de liaisons vissées.

5. Support d'outils selon l'une des revendications 1 à 4, dans lequel les éléments de liaison ou les cames ou les dispositifs de réception d'outils s'étendent transversalement à la direction longitudinale de l'élément de support (3) du type ceinture ou courroie.

6. Support d'outils selon la revendication 5, dans lequel le support d'outils est conçu comme une courroie dentée et dans lequel les éléments de liaison ou les cames ou les dispositifs de réception d'outils s'étendent symétriquement le long du plan médian des dents.

7. Support d'outils selon la revendication 6, dans lequel l'outil respectif (10) s'étend sur plus d'une largeur de dent ou d'un pas de dent, l'outil étant de préférence reçu par plusieurs dispositifs reliés à l'élément de support par une liaison de matière.

8. Support d'outils selon l'une quelconque des revendications 1 à 7, dans lequel le matériau élastomère est du polyuréthane thermoplastique.

9. Support d'outils selon l'une des revendications 1 à 8, dans lequel les dispositifs de réception d'outils sont reliés à des outils conçus comme des couteaux ou des éléments de coupe de telle sorte que l'élément de support en forme de courroie ou de bande forme un couteau à ruban ou une scie à ruban en rotation.

10. Support d'outils selon la revendication 9, dans lequel les couteaux ou les éléments de coupe sont conçus pour couper des deux côtés et l'élément de support en forme de courroie ou de bande est conçu comme un couteau à bande ou une scie à ruban travaillant de manière linéaire, de préférence entraîné de manière oscillante et sur une longueur partielle de l'élément de support.

11. Support d'outils selon l'une des revendications 1 à 8, dans lequel les dispositifs de réception d'outils sont reliés à des outils réalisés sous forme d'entraîneurs ou de râteaux, l'élément de support en forme de bande ou de courroie formant un élément de transport circulant et/ou travaillant de manière linéaire.

12. Utilisation d'un support d'outils selon l'une des revendications 1 à 11 au sein d'une installation de coupe ou de convoyage d'une machine de coupe et de récolte, de préférence d'une moissonneuse-batteuse.

13. Procédé de fabrication d'un support d'outils selon l'une des revendications 1 à 11, dans lequel l'élément de support (3) en forme de ceinture ou de courroie en matériau élastomère est extrudé avec les éléments de renforcement encastrés et s'étendant dans sa direction longitudinale, puis les éléments de liaison ou les cames reliés à l'élément de support par liaison de matière sont soudés sur le côté de travail ou le côté arrière de l'élément de support.
